# EUROPÄISCHE PATENTANMELDUNG

(11) **EP 0 644 397 A2**
(43) Veröffentlichungstag der Anmeldung: **22.03.1995**
(21) Anmeldenummer: 94113594.9
(22) Anmeldetag: 31.08.1994
(51) Int. Cl.: G01B 3/20

(54) **Elektronisches Linear-Bügelmikrometer mit grossem Messbereich**

(30) Priorität: 18.09.1993 DE 4331768
(71) Anmelder: HELIOS Messtechnik GmbH & Co. KG, D-74676 Niedernhall (DE)
(72) Erfinder: Gärtner, Gerhard, D-74238 Krautheim-Gommersdorf (DE); Walz, Thomas, D-74676 Niedernhall (DE)
(74) Vertreter: Kratzsch, Volkhard, Dipl.-Ing.

(57) **Zusammenfassung**

Die Erfindung betrifft einen Bügelmikrometer mit großem Meßbereich, bei dem die Pinole (2) den gesamten Meßbereich überstreichen kann.

Die Pinole (2) ist mit einer Maßverkörperung (3) versehen und linear verschieblich in der Meßachse angeordnet, wobei die Meßkraft durch ein spezielles Federsystem aufgebracht wird, das auf einen mit der Pinole (2) verbundenen Schlitten (20) mit relativ kleineren Verschiebebereichen wirkt, der von der Pinole (2) so entkoppelt werden kann, daß durch Druck auf ein Betätigungselement (6) die Kopplung zwischen Schlitten (20) und Pinole (2) gelöst werden kann, wodurch die Pinole (2) im gesamten Meßbereich verschoben werden kann und nach Einkopplung des Schlittens (20) in einem begrenzten Bereich verschieblich ist.

## Beschreibung

In der Längenmeßtechnik ist der Meßschieber mit Nonius oder Elektronik mit digitaler Anzeige das am weitesten verbreitete Gerät zur Messung von Längen und Durchmessern. Bei diesen Geräten liegen jedoch Maßverkörperung und gemessene Länge entgegen dem von dem Pyhsiker Ernst Abbe geforderten Komparatorprinzip (Abbe'sches Prinzip) nicht in einer Achse. Daher ist dieses Meßprinzip Fehlern erster Ordnung unterworfen, die seine Genauigkeit begrenzen. Eine zweite Ursache für mögliche Meßfehler bildet die nicht definierte Meßkraft dieser Geräte, da sie bedienerabhängig ist.

Diese Nachteile der Verletzung des Abbe'schen Prinzipes können dadurch vermieden werden, daß mit einer an einem Meßbügel angebrachten, in der Achse der zu messenden Größe angeordneten Pinole, die die Maßverkörperung trägt, gemessen wird. Bei einem elektronischen Gerät ist die Ableseelektronik starr mit dem Meßbügel verbunden.
Nachteilig für ein solches Meßgerät ist jedoch, daß
a) eine konstante Meßkraft nicht gewährleistet ist und
b) der Verschiebebereich nicht optimal ergonometrisch gestaltet werden kann, so daß eine bequeme Einhandbedienung, wie sie bei einer Verschiebung mit dem Daumen möglich wäre, nicht möglich ist.
c) Meßbereich und Verschiebebereich sind miteinander gekopplt oder sogar identisch.

Der Nachteil einer nicht konstanten Meßkraft kann durch eine Lösung, wie sie in der EP-Patentschrift 0 485 048 A2 für einen Meßschieber beschrieben wird, vermieden werden, wobei bei der vorgestellten Erfindung auf einer der Meßschneiden eine Meßuhr befestigt ist, die eine relativ konstante Meßkraft aufweist. Nachteilig ist jedoch die Verletzung des Komparatorprinzips und die Notwendigkeit, die Werte zweier Skalen zu verrechnen.

Diese oben aufgezeigten Probleme werden weitgehend durch die sogenannten Bügelmikrometer, wie sie in der Patenschrift DE - OS 3131673 vorgestellt werden, gelöst. Bei diesen Geräten liegen Maßverkörperung und gemessene Länge nahezu in einer Achse. Bei den Bügelmeßschrauben (Mikrometern) wird der Vorschub durch eine Drehspindel bewirkt, über deren Stellung und den zurückgelegten Weg eine Zuordnung der gemessenen Länge im 1/1000 mm Bereich möglich ist. Die Meßkraft liegt bei handelsüblichen Mikrometern zwischen 5 und 10 Newton, die max. Meßkraft wird über eine Ratsche begrenzt (Drehmomentbegrenzung). Bedingt durch die Spindel ist der Meßaufwand wegen des notwendigen Verdrehens der Spindel hoch, es ist keine ergonometrische Einhandbedienung möglich und der Meßweg ist üblicherweise auf 25 mm begrenzt.

Um auch größere Längen > 25mm mit der geforderten hohen Genauigkeit messen zu können, werden Meßbügel in Schrittweiten von 25 mm (0-25, 25-50, 50-75mm etc.) angeboten. Nachteilig bei diesen Mikrometern ist, daß für die Überprüfung (bei elektronischen Mikrometern Nullung) der Einsatz eines Kalibrierstücks erforderlich ist.

Es sind Geräte bekannt, die den Nachteil des hohen Meßaufwandes bei Spindelmikrometern durch lineare Verschiebung der Pinole erheblich reduzieren. Es sind aus einschlägigen Patentschriften wie DE 3432511 C2, Mikrometer bekannt, die über einen eingebauten Rechner die Werte digital mit Auflösungen von 1/1000 mm anzeigen und Schnittstellen sowie Auswertefunktionen zur Verfügung stellen.

Derartige Geräte existieren auch für Spezialprobleme der Meßtechnik, so beschreibt die Patentschrift DE 37 03652 C2 einen mechanischen und einen elektronischen Mikrometer zur Messung von Nuten. Die am Markt erhältichen Geräte verfügen, ebenso wie ihre mechanischen Vorgänger aber auch nur über Meßwege von ca. 25 mm und die Meßkraft ist nicht konstant.

Weitere Geräte, mit denen sich vergleichende Messungen hoher Genauigkeit erreichen lassen, sind Meßrachenlehren, wie sie in der Patentschrift DE 3540905 A 1 beschrieben sind. Diese Geräte können bei entsprechender Konstruktion über einen großen Einstellbereich verfügen, während der Meßweg oft nur 1 mm oder kleiner ist. Da der Verstellaufwand solcher Rachenlehren sehr groß ist werden sie i.a. nur zu Vergleichsmessungen eingesetzt.

Der Erfindung liegt die Aufgabe zugrunde, ein elektronisches Meßgerät dahingehend zu entwickeln, das es unter Vermeidung der oben beschriebenen Nachteile herkömmlicher Mikrometer, mit einer Genauigkeit, wie sie bei Mikrometerschrauben üblich ist, erlaubt, die Messung mit der Einfachheit und Schnelligkeit eines Meßschiebers (Linearprinzip) mit der Genauigkeit eines Mikrometers (Meßspindelprinzip) durchzuführen, ohne dabei die Nachteile der unterschiedlichen Meßkraft zu haben, die beide Meßgeräte, Meßschieber und Mikrometer aufweisen.

Hierbei sind ergonomische Ansprüche zu berücksichtigen, so sollte eine über den Daumen zu tätigende Verschiebung der Pinole einen Bereich von 25 mm nicht wesentlich überschreiten und die Betätigungskraft sollte nur unwesentlich höher sein, als die notwendige Meßkraft.

Die Meßkraft sollte über den Meßweg wegen der unvermeidbaren Aufbiegung des Bügels weitgehend konstant sein und so bemessen sein, daß kleinere Teile automatisch zentriert werden.

Für die Außenmessung großer Teile sollte das Gerät über eine Minimalwertspeicherfunktion und für die Innenmessung über eine Maximalwertspeicherfunktion verfügen.

Darüber hinaus sollte die Erfindung kurze Meßzeiten bei Wiederholmessungen ermöglichen. Eine erneute Kalibrierung bei Wechsel des Meßbereiches sollte nicht notwendig sein.

Das auf der Erfindung beruhende Gerät sollte darüber hinaus über eine digitale Anzeige und einen Datenausgang zur Übertragung der Meßwerte an ein übergeordnetes Meßdatenerfassungssystem verfügen.

Diese Aufgaben werden erfindungsgemäß durch die Ansprüche 1 bis 9 gelöst. Die Erfindung beinhaltet das Prinzip eines Bügelmikrometers, bei dem Fehler 1. Ordnung dadurch vermieden werden, daß die Pinole mit der Maßverkörperung dem Komparator-Prinzip gehorchend in Verlängerung der zu messenden Größe verschieblich unter einer feststehenden Meß- und Anzeige-Elektronik angeordnet ist.

Die Aufgabe der Sicherstellung einer in weiten Grenzen gleichbleibenden Meßkraft wird erfindungsgemäß dadurch gelöst, daß ein Schlitten, der durch eine Taste verschoben wird, über ein spezielles Federnsystem die Meßkraft aufbringt. Der mit ca. 25 mm verglichen mit der Länge des Federsystems relativ kleine Hub bewirkt, daß die Federkennlinie für den Bewegungsbereich relativ flach verläuft.

Die Aufgabe einen, verglichen mit herkömmlichen Mikrometern großen Meßbereich abzudecken, wird dadurch gelöst, daß die Pinole die volle Länge des Meßrachens überstreichen kann. Hierzu ist die Pinole mit einem als Schlitten ausgeprägten Mechanismus form- und/oder reibschlüssig verbunden. Der Form/Reibschluss kann bei Druck auf eine Drucktaste entriegelt und dadurch die Pinole vom Schlitten gelöst werden, so daß jeder im Bereich des Bügels liegende Meßbereich eingestellt werden kann.

Die Aufgabe der Vermeidung von Meßfehlern durch unterschiedliche Meßkräfte, die Bügel, Meßeinsätze und Meßobjekt verformen, wird dadurch erreicht, daß das Federnsystem nur auf den Schlitten wirkt, der auf Grund der Verschiebemöglichkeit relativ zur Pinole und seiner speziellen Federkonstruktion gewährleistet, daß im gesamten Meßbereich die Meßkraft nahezu konstant ist.

Die Aufgabe, ergonomische Forderungen zu erfüllen, wird dadurch gelöst, daß die Form des Gerätes so ausgelegt wurde und das Gewicht auf Grund der eingesetzten Elektronik und des geringen Stromverbrauchs so niedrig bemessen ist, daß das Gerät sich ermüdungsfrei auch über lange Zeiträume handhaben läßt.

Eine gegenüber der Meßkraft nur geringfügig höhere Verschiebekraft wird u.a. dadurch erreicht, daß sich Maßverkörperung und Abtastsystem nicht berühren. Der Verschiebeweg von ca. 25 mm liegt in einem ergonometrisch günstigen Bereich.
- Fig. 1: zeigt eine Gesamtdarstellung des Gerätes für Außenmes sungen.
- Fig. 2: Zeigt das Gerät für Innenmessungen.
- Fig. 3: zeigt den Aufbau der Mechanik mit einer Schnittzeichnung in Fig 3 a.
- Fig. 4: zeigt den Schlitten für den Druckmechanismus für einen Formschluß mit einer beispielhaft dargestellten Verzahnung.
- Fig. 5: zeigt den Schlitten für den Druckmechanismus für einen Reibschluß.
- Fig. 6: zeigt ein Beispiel für das spezielle Federnsystem zur Aufbringung der Meßkraft.
- Fig. 7: zeigt das Abtastsystem und die Maßverkörperung mit einer Detaillzeichnung in Fig. 7a.
- Fig. 8: zeigt eine beispielhafte Anordnung der Elektronik mit der Maßverkörperung in Fig. 8a.

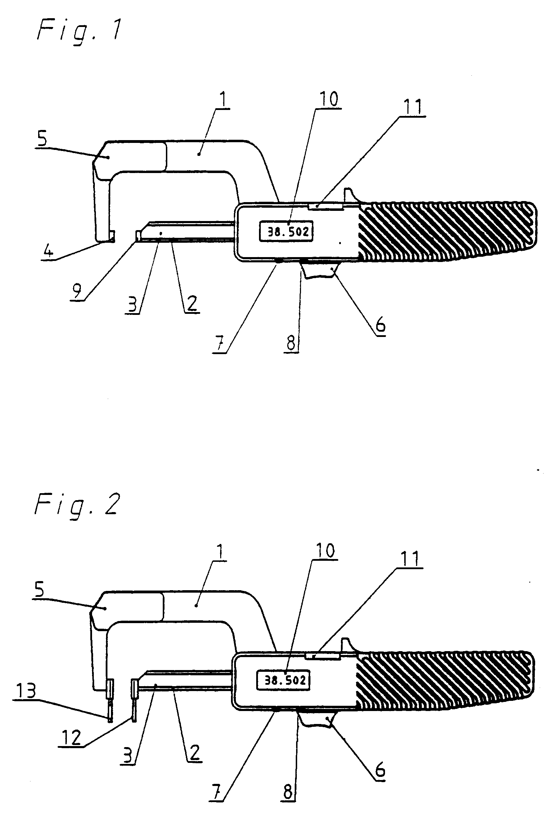

Fig. 1 gibt eine vorteilhafte Ausführungsform des Gerätes für die Erfassung von Außenmaßen wieder. Durch Druck auf die Taste (6) läßt sich die Pinole (2) entriegeln und ist auf jedes gewünschte Längenmaß innerhalb des Bügeldurchmessers ohne Aufwand einstellbar.

Um das Gewicht des Gerätes unter ergonomischen Gesichtspunkten in Grenzen zu halten wurde die Stärke des Bügels (1 ) so optimiert, daß zu Beginn von Meßreihen, die sich über Tage erstrecken können nur einmal der Meßeinsatz (9) der Pinole (2) mit der Meßkraft gegen den Meßeinsatz (4) des Meßbügels (1) gefahren werden muß. Mit der Nullung (8) des elektronischen Meßsystems (16) ist damit ein Bezug geschaffen, der die noch verbleibende Aufbiegung des Meßbügels (1), wie sie bei jedem Bügelmikrometer in Folge der Meßkraft auftritt, berücksichtigt.

Die Minimalwert-Speicherfunktion in der Anzeige kann über eine Taste (7) aktiviert werden, so daß auch ohne Zentrierung über einfaches Schwenken des Gerätes der Außendurchmesser exakt ermittelt werden kann.

Sowohl Pinole (2) als auch Meßbügel (1) können je nach Meßaufgabe des Gerätes mit unterschiedlichen Meßeinsätzen (4,9) ausgestattet werden z.B. mit Schneiden für die Vermessung von Einstichen, mit Flacheinsätzen für die Wellenvermessung und mit balligen Einsätzen für die Vermessung von glatten Prüflingen.

Zum Schutz gegen Handwärme ist der Bügel (1) für eine Zweihandbedienung in einer vorteilhaften Ausführungsform mit einer isolierenden Kunststoffschale (5) ausgestattet.

Fig. 2 zeigt das gleiche Gerät in einer vorteilhaften Ausführung für die Vermessung von Innenmaßen. Durch Einstellung des Gerätes mit einem Lehrring und das Setzen der Anzeigeelktronik (10) auf einen Presetwert durch Druck auf eine Taste (8) werden sowohl die Durchbiegung des Bügels (1) als auch die der Taststifte (12,13) kompensiert, da immer mit nahezu gleicher Meßkraft gemessen wird. Die Maximalwet-Speicherfunktion der Elektronik ermöglicht eine exakte Bestimmung von Innenmaßen durch Schwenken des Gerätes ohne daß eine Zentrierung notwendig ist.

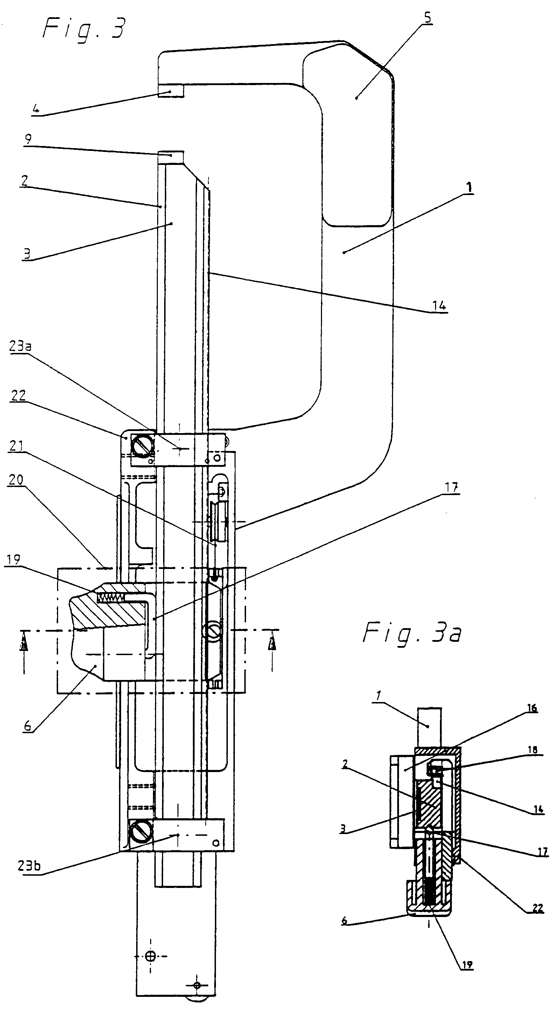

Der mechanische Aufbau des Gerätes für die Außenmessung geht aus Fig. 3 hervor. Der Prüfling wird zwischen den beiden Meßeinsätzen (4, 9) im Bügel(1) bzw. Pinole (2) so eingespannt, daß der Schlitten (20) ausgelenkt ist und mit der Kraft des Federsystems über einen Baudenzug (21) beaufschlagt wird. Der Vorteil dieser Ausführungsform ist, daß der Schlitten (20), der über eine Taste (6) verschoben werden kann, unabhängig vom Meßsystem ist.

Die Maßverkörperung (3) ist auf die Pinole (2) aufgebracht und liegt in dieser vorteilhaften Ausführungsform vollständig in der Achse der zu messenden Länge (Abbe'sches Prinzip). Durch den großen Lagerabstand (23a, 23b) der Pinole (2) im Grundgehäuse (22) sind die Anforderungen an die Fertigungs-genauigkeit relativ niedrig.

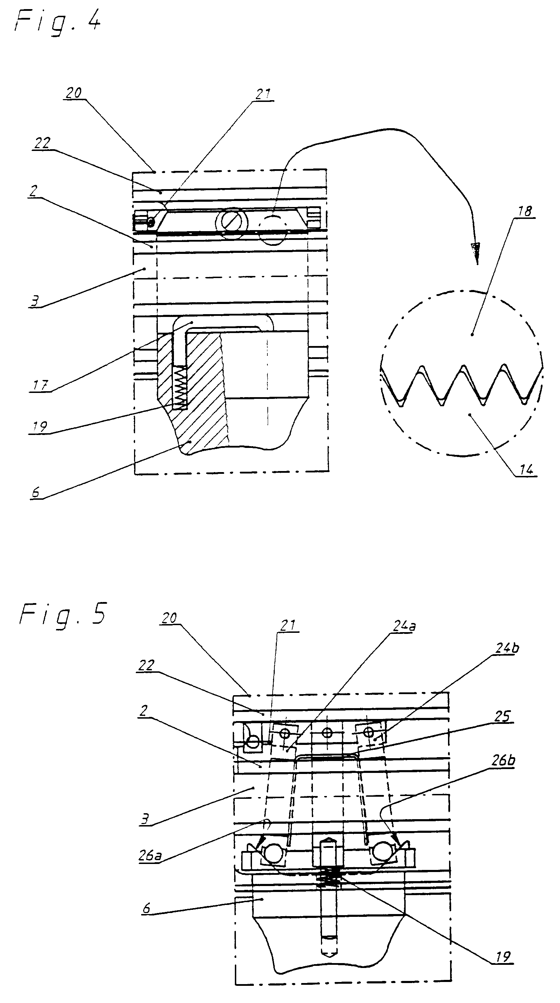

In der gezeigten Darstellung einer möglichen Ausführungsform wird die Kopplung zwischen Schlitten (20) und Pinole (2), wie in Fig. 4 beispielhaft dargestellt, über den Formschluß zweier Zahnstangen (14, 18) hergestellt. Über eine Druckbügel (17) werden in dieser beispielhaften Darstellung die Zahnstangen (14, 18) gegeneinander gepresst und dadurch der Forschluss vollzogen. Diese vorteilhafte Ausführung läßt eine relativ geringe über Federn (19) eingestellte Vorspannung des Druckbügels zu, da bei einem Verkippen des Schlittens (20) beim Zurückziehen der Taste (6) immer sichergestellt ist, daß genügend Zähne im Eingriff sind.

Wird in dieser vorteilhaften Ausführungsform die Taste (6) gedrückt, so wird die Verzahnung (18) aus der an der Pinole (2) angebrachten Verzahnung (14) ausgerückt und die Pinole (2) läßt sich mit der Hand im gesamten Meßraum frei verschieben. Das elektronische Meßsystem (15) registriert ausschließlich die Bewegung der Pinole (2), so daß die Position des Schlittens (20) keinen Einfluß auf den Meßwert hat.

Eine andere vorteilhafte Ausführungsform ist der in Fig. 5 dargestellte Reibschluß zwischen Pinole (2) und Schlitten (20). In der dargestellten Form werden zwei Bügel (24a, 24b) durch eine Feder (25) so auseinander gedrückt, daß sie einen sicheren Schluß zwischen Pinole (2) und Schlitten (20) gewährleisten.

Durch Druck auf eine speziell geformte Taste (6) werden beide Bügel (24a, 24b) über die Tastenschrägen (26a, 26b) zusammengedrückt und die Pinole (2) läßt sich frei im Meßbereich verschieben.

Die Kraft einer Feder ist proportional zur Auslenkung, da der Erfindung die Aufgabe zugrunde liegt eine möglichst konstante Meßkraft über den gesamten Weg des Schlittens (20) zu gewährleisten, muß der Verschiebebereich des Schlittens (20), der mit der Federkraft beaufschlagt wird, klein gegen die Länge des Federsystems sein.

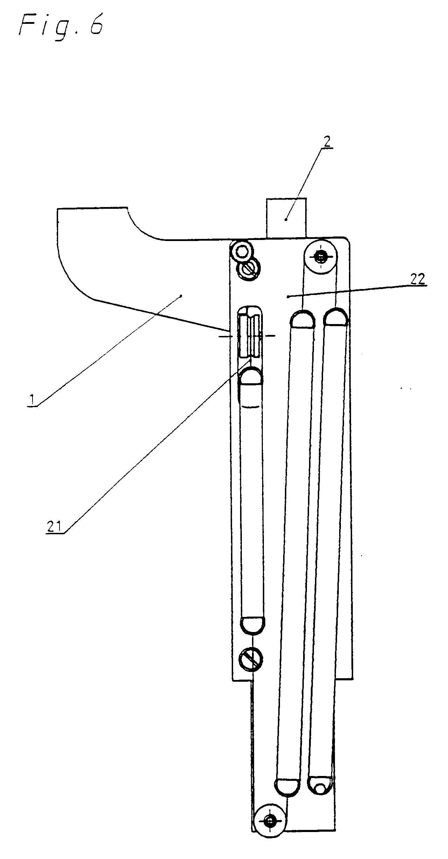

Fig. 6 zeigt eine vorteilhafte Ausführung des über einen Baudenzug (21) geführten Federsystems.

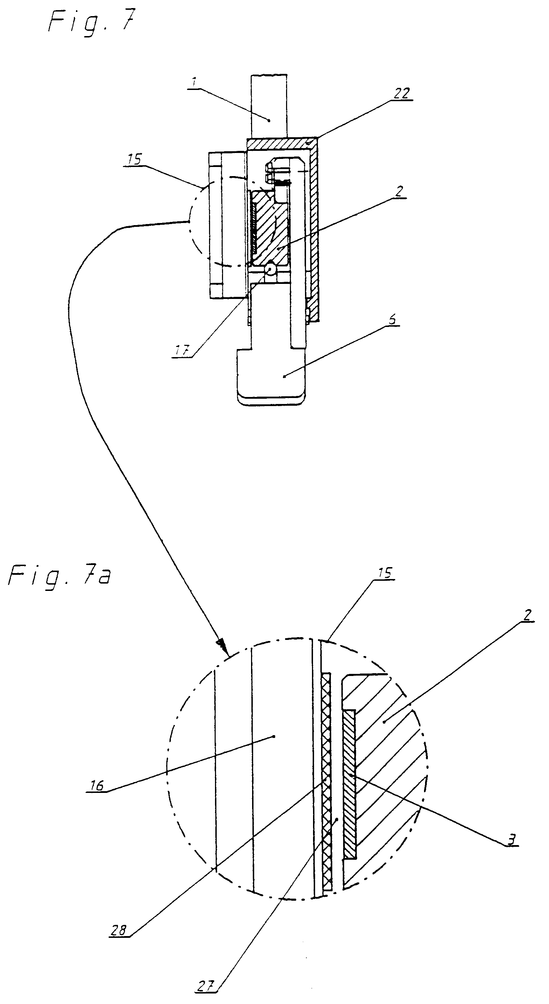

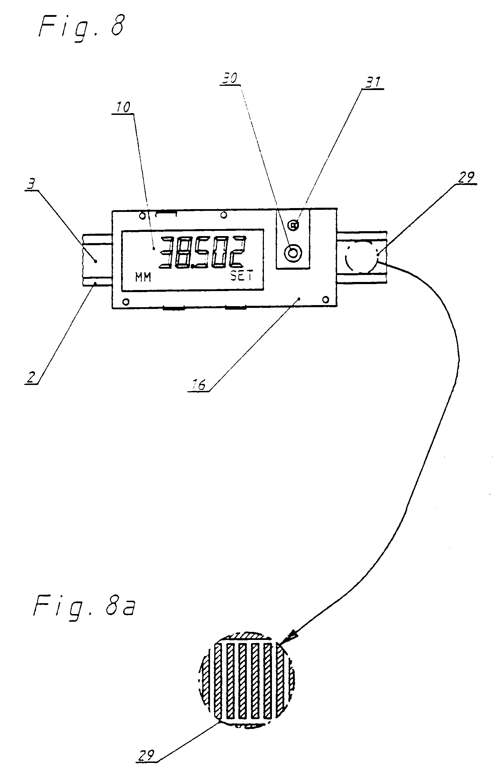

In Fig. 7 ist eine vorteilhafte Variante eines kapazitiven Meßsystems (15) und der Mäander (29) der Maßverkörperung (3) , wie sie mit der Pinole (2) starr verbunden ist wiedergegeben. Durch den Luftspalt (27) zwischen Maßverkörperung (3) und Abtastkopf (28) ist sichergestellt, daß keine zusätzlichen Reibungskräfte bei der manuellen Bewegung der Pinole (2) über den Schlitten (20) aufzuwenden sind. Auf den beispielhaften Darstellungen in Fig. 7 und 8 lassen sich das Batteriefach (11) und die LED (30) sowie das Photoelement (31) für die Datenübertragung zum OPTO-Stecker der seriellen Schnittstelle erkennen.

## Patentansprüche

1. Bügelmikrometer mit großem Meßbereich dadurch gekennzeichnet, daß die Pinole den gesamten Meßbereich überstreichen kann, mit einer Maßverkörperung versehen und linear verschieblich in der Meßachse angeordnet ist, wobei die Meßkraft durch ein spezielles Federsystem aufgebracht wird, das auf einen mit der Pinole verbundenen Schlitten mit relativ kleineren Verschiebebereichen wirkt, der von der Pinole so entkoppelt werden kann, daß durch Druck auf ein Betätigungselement die Kopplung zwischen Schlitten und Pinole gelöst werden kann, wodurch die Pinole im gesamten Meßbereich verschoben werden kann und nach Einkopplung des Schlittens in einem begrenzten Bereich verschieblich ist.

2. Bügelmikrometer nach Anspruch 1 dadurch gekennzeichnet, daß die Koppelung zwischen linear verschieblicher Pinole und Schlitten durch einen Formschluß über eine durch ein Betätigungselement lösbare Verzahnung hergestellt wird wobei eine Verzahnung oder Zahnstange direkt mit der Pinole verbunden wird oder auf sie aufgebracht wird und die über ein Betätigungselement entriegelbare Verzahnung am Schlitten angebracht ist, derart, daß über ein Druckelement diese Verzahnung mit vorgegebener Federkraft in die Verzahnung der Pinole gezogen wird.

3. Bügelmikrometer nach Anspruch 1 dadurch gekennzeichnet, daß die Kopplung zwischen linear verschieblicher Pinole und Schlitten durch einen Reibschluß über durch ein Betätigungselement lösbare durch Federn vorgespannte Umklammerungsbügel so hergestellt wird, daß bei Druck auf das Betätigungselement die Schrägstellung der Klammerbügel verringert wird, so daß die Pinole sich gegenüber dem Schlitten verschieben läßt.

4. Bügelmikrometer nach Anspruch 1 bis 3 dadurch gekennzeichnet, daß durch einen Baudenzug und entsprechende Umlenkung der Federkraft die Gesamtlänge des Federnsystems groß im Vergleich zum Verschiebeweg des Schlittens wird, so daß die Änderung der Meßkraft über den Verschiebeweg des Schlittens klein ist.

5. Bügelmikrometer nach Anspruch 1 bis 4 dadurch gekennzeichnet, daß sowohl Außen- als auch Innenmessungen mit entsprechenden Gerätevariationen vorgenommen werden können, wobei für die Innenmessung entsprechende Taststifte verwendet werden müßen, und das Federsystem so umzuhängen ist, daß die Federkraft den Schlitten auch außen zieht, wobei elastische auf den Meßwert einwirkende Effekte durch Kalibrierung des System an einem Lehrring in Verbindung mit einem Presetwert der Elektronik ausgeglichen werden können.

6. Bügelmikrometer nach Anspruch 1 bis 5 dadurch gekennzeichnet, daß eine Elektronik verwendet wird, die die Maßverkörperung nicht berührt, so daß die bei der Bedienung aufzuwendende Verschiebekraft des Schlittens im wesentlichen der Meßkraft entspricht und daß diese Elektronik über einen Datenausgang sowie über Maximal- und Minimalwertspeicherfunktionen sowie über einen Presetwert verfügt und vom Stromverbrauch her so bemessen ist, daß sie über eine kleine Batterie über einen langen Zeitraum versorgt werden kann.

7. Bügelmikrometer nach Anspruch 1 bis 6 dadurch gekennzeichnet, daß die Lagerstellen der in der Meßachse verschieblichen Pinole weit auseinanderliegen, so daß die geforderten Fertigungsgenauigkeiten reduziert werden und daß sie als Gleitlager oder Wälzlager ausgeführt sind.

8. Bügelmikrometer nach Anspruch 1 bis 7 dadurch gekennzeichnet, daß eine Kompensation elastischer Verformungen durch die Meßkraft bei Außenmessungen durch meßkraftbeaufschlagtes Zusammenfahren der Pinole und des Bügels mit, oder ohne Einlegen eines Zwischenstücks und Nullung der Elektronik bzw. Setzen auf einen Presetwert erfolgt und daß dieser Vorgang für die Innenmessung durch Setzen eines Presetwertes bei der Vermessung eines Kalibrier-Lehrringes erfolgt.

9. Bügelmikrometer nach Anspruch 1 bis 8 dadurch gekennzeichnet, daß bei beliebig großem Meßbügel die Länge der Pinole auf ein sinnvolles Maß begrenzt wird, so daß nicht der gesamte Meßbereich des Bügels durch die Pinole abgedeckt wird und eine Kompensation der elastischen Verformungen von Bügel und Meßeinsätzen über entsprechende Zwischenstücke bzw. Lehrringe unter Verwendung des Presets nach Anspruch 8 erfolgt.
